# EUROPEAN PATENT APPLICATION

(11) **EP 4 686 026 A1**
(43) Date of publication of application: **28.01.2026**
(21) Application number: 24190930.8
(22) Date of filing: 25.07.2024
(51) Int. Cl.: H02J 1/00, H02J 3/00

(54) **ELECTROLYSIS SYSTEM AND METHOD FOR OPERATING SAME NOTWITHSTANDING OCCURRENCE OF ADVERSE OPERATIONAL EVENTS**

(71) Applicant: Siemens Energy Global GmbH & Co. KG, 81739 München (DE)
(72) Inventor: Bendig, Marvin, 90513 Zirndorf (DE); Loku, Fisnik, 90439 Nürnberg (DE); Buratckii, Artem, 90459 Nürnberg (DE)

(57) **Abstract**

Electrolysis system and method to operate said system notwithstanding occurrence of an adverse operational event are provided. Disclosed embodiments feature bypass circuitry configured to dynamically and quickly adapt the electrolysis system during occurrences of such adverse operational events and effectively inhibit the possibility of having to shut down the entire electrolysis system.

## Description

### BACKGROUND

Disclosed embodiments involve the field of electrolysis, and, more specifically, are directed to an electrolysis system and method for operating such a system, notwithstanding occurrence of adverse operational events in connection with the electrolysis system.

An electrolysis system involves applying electricity to a given substance to realize a chemical change. Corresponding to a variety of different electrochemical electrolysis processes, there is also a large variety of electrolysis systems, such as may involve an electrolysis system arranged for water electrolysis, or may involve electrolysis systems arranged for a variety of industrial applications, such as metallurgical processes, manufacturing processes permitting manufacturability of elements and chemical compounds, such as hydrogen chlorine, aluminum, sodium hydroxide, etc.

Hydrogen and oxygen can be generated by an electrolysis system by way of water electrolysis. For example, water electrolysis may be carried out by means of a proton exchange membrane (PEM) electrolysis or alkaline electrolysis. Regardless of the specific means involved for carrying out the electrolysis process, the electrolysis system uses electrical energy, such as may be obtained from a power grid, power sources based on renewable energy or a combination of both, to produce hydrogen and oxygen from water supplied to the electrolysis system. This process involves a plurality of electrolyzer stacks, each stack in turn involving a number of electrolyzer cells. Water is introduced as a reactant into the electrolyzer stacks subject to direct current (DC voltage), and after the water has flowed through the electrolysis cells, two fluid streams emerge as electrolysis products comprising water and respective gas bubbles including molecules of O₂ and H₂. To maintain the operational stability and security of the power grid and inhibit the possibility of triggering blackouts over potentially extensive geographical areas, the electrolysis system needs to conform to certain requirements that may arise during adverse operational events.

For example, the electrolysis system needs to have a capacity to ride through transient voltage events, such as a low voltage ride through (LVRT) event. This refers to the ability of a system to stay connected to the power grid during such an event. Another example of an adverse operational event may involve a fault event in a respective electrolyzer stack. Accordingly, in either case, it is desirable to be able to quickly adapt the electrolysis system during occurrences of such adverse operational events and in turn inhibit a possibility of having to shut down the entire electrolysis system.

### BRIEF SUMMARY

In one aspect, an electrolysis system operable notwithstanding occurrence of an adverse operational event affecting the electrolysis system is provided. The electrolysis system includes a power bus electrically coupled to a power grid and operable to transfer electric power from the power grid to the electrolysis system. A plurality of electrolyzer stacks is connected in series circuit to one another and being energized by way of the power bus to perform an electrolysis process. A respective electrolyzer stack bypass circuitry is connected to an input side of a respective electrolyzer stack of the plurality of electrolyzer stacks. The respective bypass circuitry is arranged to, within a first-time interval, electrically disconnect the respective electrolyzer from the plurality of electrolyzer stacks, based on detection of the adverse operational event. The bypass circuitry includes a main circuit branch including a main switch that normally is in an electrically closed position to pass, during normal operation of the electrolysis system, a flow of operating electrical current to the respective electrolyzer stack, where the main switch is set to an electrically open position upon detection of the adverse operational event. The bypass circuitry further includes a bypass circuit branch and a current transition circuit branch arranged in parallel circuit with the main circuit branch to transition the flow of the operating electrical current from the main circuit branch to the bypass circuit branch. The transition to occur within a second-time interval that elapses before the first-time interval elapses. The electrical current transition circuit branch includes a diode having an anode connected to the input side of the respective electrolyzer stack and having a cathode connected to an input junction of the main circuit branch. Once the respective electrolyzer stack is electrically disconnected from the plurality of electrolyzer stacks, remaining electrolyzer stacks from the plurality of electrolyzer stacks, are operable to continue the electrolysis process notwithstanding occurrence of the adverse operational event.

A method to operate an electrolysis system notwithstanding occurrence of an adverse operational event. The method allows electrically coupling a power bus to a power grid. The power bus is configured to transfer electric power from the power grid to the electrolysis system. The method further allows connecting in series circuit a plurality of electrolyzer stacks to one another. The plurality of electrolyzer stacks being energized by way of the power bus to perform an electrolysis process. The method further allows connecting a respective electrolyzer stack bypass circuitry to an input side of a respective electrolyzer stack of the plurality of electrolyzer stacks. Based on detection of an adverse operational event, electrically disconnecting, within a first-time interval, the respective electrolyzer stack from the plurality of electrolyzer stacks. The bypass circuitry comprises a main circuit branch including a main switch that normally is in an electrically closed position to pass, during normal operation of the electrolysis system, a flow of operating electrical current to the respective electrolyzer stack. The bypass circuit further comprises a bypass circuit branch and a current transition circuit branch. Further steps of the method allow setting the main switch to an electrically open position upon detection of the adverse operational event, connecting in parallel circuit the main circuit branch and the current transition circuit branch to transition the flow of the operating electrical current from the main circuit branch to the bypass circuit branch. The transition to occur within a second time interval that is shorter than the first-time interval. The method proceeds with connecting in the current transition circuit branch a diode having an anode connected to the input side of the respective electrolyzer stack, the diode having a cathode connected to an input node of the main circuit branch, and operating remaining electrolyzer stacks from the plurality of electrolyzer to continue the electrolysis process notwithstanding of occurrence of the adverse operational event.

### BRIEF DESCRIPTION OF THE DRAWINGS

To easily identify the discussion of any particular element or act, the most significant digit or digits in a reference number refer to the figure number in which that element is first introduced.
FIG. 1 is a simplified schematic representation of one example embodiment of a disclosed electrolysis system.
FIG. 2 is a schematic representation of bypass circuitry featured in disclosed embodiments and arranged to electrically bypass a respective electrolyzer stack based on detection of an adverse operational event.
FIG. 3 through FIG. 7 collectively depict a flow sequence indicative of various operational states of the bypass circuitry.

### DETAILED DESCRIPTON

The present inventors have recognized that it is desirable that an electrolysis system has the capability to realize dynamic and quick adaptability, such as during occurrences of adverse operational events, that would permit continued operation of the electrolysis system while meeting applicable requirements in connection with the operation of the electrolysis system. For example, in applications where the electrolysis system is used to produce hydrogen, such adaptability would inhibit the possibility of having to shut down the entire electrolysis system and interrupt, for example, the production of hydrogen with the electrolysis system.

As previously noted, in general, electrolysis systems can be arranged for a variety of industrial applications, such as may involve metallurgical processes, manufacturing processes permitting manufacturability of elements and chemical compounds, such as hydrogen chlorine, aluminum, sodium hydroxide, etc. Thus, in general, such adaptability would inhibit the possibility of having to shut down the entire electrolysis system and interrupt any given electrolysis process involved.

At least in view of the foregoing considerations, disclosed embodiments feature bypass circuitry configured to --in a cost-effective and reliable manner-- dynamically and quickly adapt the electrolysis system during occurrences of such adverse operational events and thus effectively inhibit the possibility of having to shut down the entire electrolysis system.

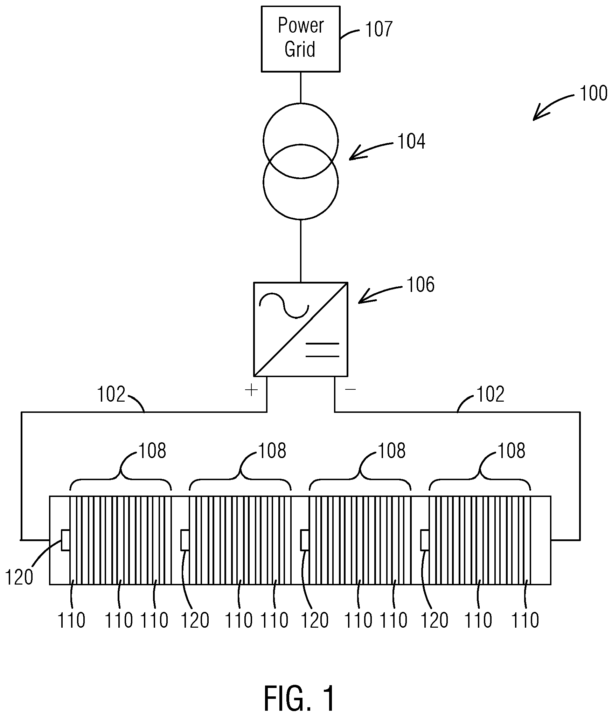

FIG. 1 is a simplified schematic representation of an electrolysis system 100 that benefits from disclosed embodiments that can permit continued operability of electrolysis system 100 notwithstanding an occurrence of an adverse operational event in connection with the electrolysis system. Without limitation, one example of an adverse operational event may be a fault event of a respective component of electrolysis system 100. Another example of an adverse operational event may be electrolysis system 100 being able to ride through a transient voltage event, such as a low voltage ride through (LVRT) event, in accordance with applicable requirements.

In one example embodiment, a power bus 102, such as a DC power bus, is electrically coupled by way of a transformer 104 (e.g., a step-down transformer) and an AC-to-DC converter 106 to a power grid 107, such as a public power grid. Electrolysis system 100 is arranged to receive electric power from power grid 107 and includes a plurality of electrolyzer stacks 108 connected in series circuit to one another. In one example application, the plurality of electrolyzer stacks 108 is energized by way of power bus 102 to perform an electrolysis process during operation of electrolysis system 100. In one example embodiment, each electrolyzer stack 108 includes a plurality of electrolysis cells 110.

Each respective electrolyzer stack 108 features a respective electrolyzer stack bypass circuitry 120 electrically connected to an input side of the respective electrolyzer stack. The respective bypass circuitry 120 is arranged to, within a first-time interval, electrically disconnect the respective electrolyzer stack, based on detection of an adverse operational event. That is, this time interval is indicative of the overall time involved to electrically disconnect the respective electrolyzer stack. In one example embodiment, the first-time interval is in a range between 100 milliseconds and 500 milliseconds. In another example embodiment, the first-time interval is in a range between 200 and 400 milliseconds. As noted above, one example of an adverse operational event may be a fault event of a respective electrolyzer stack 108. Another example of an adverse operational event may be electrolysis system 100 riding through a transient voltage event, such as a low voltage ride through (LVRT). A typical core requirement may involve remaining operationally connected to power grid 107 in case of a temporary voltage dip at the point of connection with electrolysis system 100.

As will be appreciated by one skilled in the art, electrolysis performance characteristics of electrolyzer stacks 108 typically are highly dependent on the input voltage available to the electrolyzer stacks 108. For example, a slight voltage reduction of the input voltage can result in substantial variation in the power demand of the electrolyzer stacks 108, where, for example, the electrolysis system is no longer able to consume power. This can lead to substantial imbalances between power availability and power consumption, such as when several gigawatts or more of electrolysis capacity may be concurrently affected.

Typically, characterization of the electrolysis characteristics of electrolysis system 100 may be obtained from the collective aggregation of the respective polarization curves of the electrolyzer stacks. The polarization curve of any given electrolyzer stack refers to a current-voltage (I-V) curve indicative of the electrolysis performance of the given electrolyzer stack under certain operational conditions. For example, in case the input voltage drops below the Nernst voltage (theoretically about 1.23 V per cell for water electrolysis), then the electrolysis process would stop and in turn the production of hydrogen (broadly stated, the output of the electrolysis process involved) would also stop. To inhibit an occurrence of this undesirable outcome, the overall polarization curve of the electrolysis system can be varied in operation by quickly, electrically bypassing one or more of the electrolyzer stacks 108 and thus effectively adjusting or matching the load presented by the remaining electrolyzer stacks 108 with respect to the available input power. To realize this load-adjusting or load-matching, one or more electrolyzer stacks 108 have to be electrically disconnected relatively quickly, as elaborated in greater detail below.

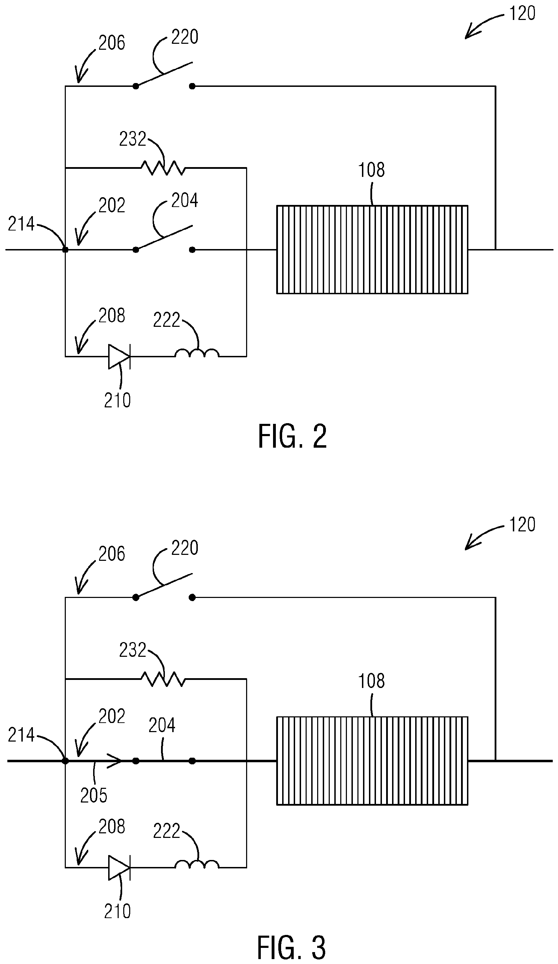

FIG. 2 is a schematic representation of the bypass circuitry 120 featured in disclosed embodiments. Electrolyzer stack bypass circuitry 120 is arranged to bypass a respective electrolyzer stack 108 based on detection of the adverse operational event. In one non-limiting embodiment, bypass circuitry 120 includes a main circuit branch 202 including a main switch 204 that normally is in an electrically closed position (as seen in FIG. 3) to pass, during normal operation of electrolysis system 100, a flow of operating electrical current (schematically represented by the slightly thicker line 205, as seen in FIG. 3) to the respective electrolyzer stack 108.

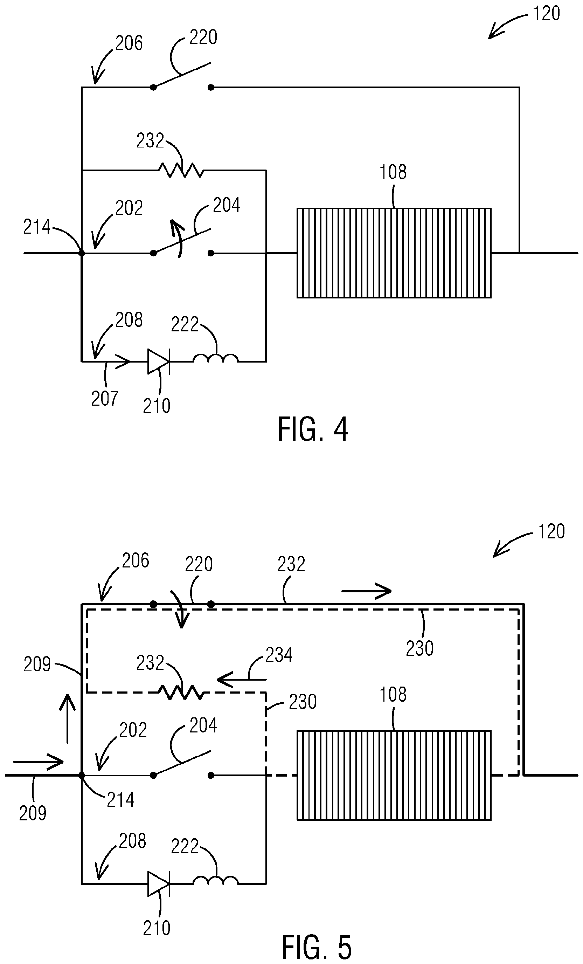

Upon detection of the adverse operational event, main switch 204 is set to an electrically open position (as seen in FIG. 4) upon detection of the adverse operational event. That is, FIG. 3 is illustrative of the operational state of bypass circuitry 120 during a normal operating condition of electrolysis system 100, such as just prior to detection of the adverse operational event and FIG. 4 is illustrative of the operational state of bypass circuitry 120 just subsequent to detection of the adverse operational event.

As shown in FIG. 2, bypass circuitry 120 further includes a bypass circuit branch 206 and a current transition circuit branch 208, which is operatively arranged in parallel circuit with main circuit branch 202 to relatively quickly, yet safely, transition the flow of the operating electrical current from the main circuit branch 202 to the bypass circuit branch 206 by way of current transition circuit branch 208. It will be appreciated that at this point, the flow of electrical current (schematically represented by slightly thicker line 207 in FIG. 4) takes place mainly through current transition circuit branch 208 in lieu of main circuit branch 202. Completion of transition or commutation of the current is to occur within a second-time interval (e.g., indicative of a time interval for transitioning the flow of current) that elapses before the first-time interval elapses. In one non-limiting example, the second time interval may last a few milliseconds. In one example embodiment, the second time interval is in a range between 10 milliseconds and 300 milliseconds.

In one example embodiment, electrical current transition circuit branch 208 includes a diode 210 having its anode connected directly or indirectly to the input side of the respective electrolyzer stack 108, and further having its cathode connected to an input junction 214 of main circuit branch 202. At the operational state represented in FIG. 4, it will be appreciated that most of the flow of electrical current would be through current transition circuit branch 208 in view of the relatively low impedance presented by diode 210 in transition circuit branch 208.

Bypass circuit branch 206 includes a bypass switch 220, which normally is in an electrically open position (as seen FIG. 3) during normal operation of the electrolysis system. Continuing with the flow sequence indicative of the various operational states of the bypass circuitry, upon completion of the second time interval (when the transition or commutation of the current flow through current transition circuit branch 208 is concluded) bypass switch 220 is set to an electrically closed position (as seen in FIG. 5) and this completes the electrical bypassing of the respective electrolyzer stack 108. The diverted current flow is schematically represented by slightly thicker line 209 in FIG. 5.

By way of example, main switch 204 and/or bypass switch 220 can each be respectively selected from various types of switches, such as a mechanical switch, a semiconductor-based switch, a circuit breaker, a vacuum-based circuit breaker, an Insulated Gate Bipolar Transistor (IGBT) switch, a Gate Turn-Off Thyristor (GTO) switch.

In one example embodiment, current transition circuit branch 208 optionally includes an inductor 222 in series circuit with diode 210. Inductor 222 is interconnected between the input side of the respective electrolyzer stack 108 and the anode of diode 210. The inductance value of inductor 222 is chosen to limit a rate of change (di/dt) of the current flow being transitioned by way of current transition circuit branch 208. This inhibits a possibility of electrical shock or damage to the respective electrolyzer stack 108. It will be appreciated that the inductance value of inductor 222 can influence the duration of the second time interval.

A circuit loop (schematically represented by dashed line 230 as seen in FIG. 5) is defined between the input side of the respective electrolyzer stack 108 and an output side of the respective electrolyzer stack 108. Circuit loop 230 is operatively defined when bypass switch 220 is set to the electrically closed position (as seen FIG. 5). Circuit loop 230 in operation includes a resistor element 232 interconnected between the input and output sides of the respective electrolyzer stack 208. Circuit loop 230 is arranged to pass a discharge current from respective electrolyzer stack 208. As seen in FIG. 5, arrow 234 is indicative of the flow direction of the discharge current.

Once the respective electrolyzer stack 108 is electrically disconnected from the plurality of electrolyzer stacks, remaining electrolyzer stacks (not shown) from the plurality of electrolyzer stacks, are operable to continue to perform the electrolysis process (e.g., continue to generate hydrogen, etc) notwithstanding occurrence of the adverse operational event.

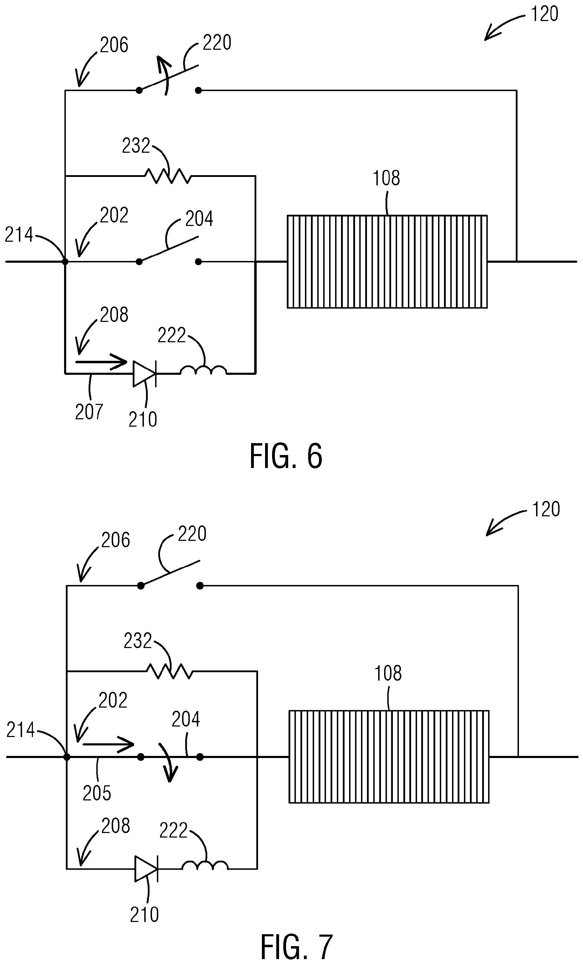

When reconnection of the respective electrolyzer stack 208 is desired, the following acts are performed, essentially reversing the acts described above regarding the disconnection of the respective electrolyzer stack 208. For example, after the LVRT event is cleared or, alternatively, after a faulty electrolyzer stack or cell is replaced or otherwise repaired, as seen in FIG. 6, bypass switch 220 is reset to the electrically open condition, and this leads to relatively quick commutation of the diverted electrical current back to the respective electrolyzer stack 208. This initially occurs through current transition circuit branch 208, where, as shown in FIG. 6, current flow through current transition circuit branch 208 is schematically represented by slightly heavier line 207, and eventually through main circuit branch 208, where, as shown in FIG. 7, current flow through main circuit branch 208 is reestablished and is schematically represented by the slightly heavier line 205. After commutation of the current flow has been completed through current transition circuit branch 208, main switch 204 is electrically closed as shown in FIG 7, thus returning to the configuration of bypass switch 220, as seen in FIG. 3, which as previously noted corresponds to the normal operating condition of electrolysis system 100.

In operation, disclosed embodiments, provide to the electrolysis system a capability to realize dynamic and quick adaptability, such as during occurrences of adverse operational events, and this capability permits continued operation of the electrolysis system while meeting applicable requirements in connection with the operation of the electrolysis system. For example, in applications where the electrolysis system is used to produce hydrogen, such adaptability would inhibit the possibility of having to shut down the entire electrolysis system and interrupt, for example, the production of hydrogen with the electrolysis system. As noted above, in general, electrolysis systems can be arranged for a variety of industrial applications, such as may involve metallurgical processes, manufacturing processes permitting manufacturability of elements and chemical compounds, such as hydrogen chlorine, aluminum, sodium hydroxide, etc. Thus, in general, such adaptability would inhibit the possibility of having to shut down the entire electrolysis system and interrupt the specific electrolysis process involved.

In operation, disclosed embodiments feature bypass circuitry configured to dynamically and quickly (practically in real time) adapt the electrolysis system during occurrences of such adverse operational events and thus effectively inhibit the possibility of having to shut down the entire electrolysis system.

Although at least one exemplary embodiment has been described in detail, those skilled in the art will understand that various changes, substitutions, variations, and improvements disclosed herein may be made without departing from the scope of the disclosure in its broadest form.

None of the description in the present application should be read as implying that any particular element, step, act, or function is an essential element, which must be included in the claim scope. The scope of patented subject matter is defined only by the allowed claims. Moreover, none of these claims are intended to invoke a means plus function claim construction unless the exact words "means for" are followed by a participle.

## Claims

1. An electrolysis system operable notwithstanding occurrence of an adverse operational event affecting the electrolysis system, the electrolysis system comprising:
a power bus electrically coupled to a power grid and operable to transfer electric power from the power grid to the electrolysis system;
a plurality of electrolyzer stacks connected in series circuit to one another and being energized by way of the power bus to perform an electrolysis process;
a respective electrolyzer stack bypass circuitry connected to an input side of a respective electrolyzer stack of the plurality of electrolyzer stacks, the respective bypass circuitry arranged to, within a first time interval, electrically disconnect the respective electrolyzer from the plurality of electrolyzer stacks, based on detection of the adverse operational event,
wherein the bypass circuitry comprises:
a main circuit branch including a main switch that normally is in an electrically closed position to pass, during normal operation of the electrolysis system, a flow of operating electrical current to the respective electrolyzer stack, wherein the main switch is set to an electrically open position upon detection of the adverse operational event,
a bypass circuit branch,
a current transition circuit branch arranged in parallel circuit with the main circuit branch to transition the flow of the operating electrical current from the main circuit branch to the bypass circuit branch, the transition to occur within a second time interval that elapses before the first time interval elapses, the electrical current transition circuit branch including a diode having an anode connected to the input side of the respective electrolyzer stack, the diode having a cathode connected to an input junction of the main circuit branch,
wherein, once the respective electrolyzer stack is electrically disconnected from the plurality of electrolyzer stacks, remaining electrolyzer stacks from the plurality of electrolyzer stacks, are operable to continue the electrolysis process notwithstanding occurrence of the adverse operational event.

2. The electrolysis system of claim 1, wherein the adverse operational event is selected from the group consisting of a fault event of the respective electrolyzer stack, and a voltage ride through event.

3. The electrolysis system of claim 2, wherein the voltage ride through event is a low voltage ride through event.

4. The electrolysis system of claim 1 or 2, further comprising a bypass switch in the bypass circuit branch, the bypass switch normally in an electrically open position during the normal operation of the electrolysis system, wherein the bypass switch is set to an electrically closed position upon completion of the second time interval.

5. The electrolysis system of any one of claims 1 to 4, wherein the current transition circuit branch further includes an inductor in series circuit with the diode, wherein the inductor is interconnected between the input side of the respective electrolyzer stack and the anode of the diode, wherein an inductance value of the inductor is chosen to limit a rate of change of the operating current flow being transitioned by way of the current transition circuit branch.

6. The electrolysis system of any one of claims 1 to 5, further comprising a circuit loop that is between the input side of the respective electrolyzer stack and an output side of the respective electrolyzer stack, the circuit loop being defined when the bypass switch is set to the electrically closed position upon completion of the second time interval, the circuit loop including a resistor element interconnected between the input side of the respective electrolyzer stack and the input junction of the respective electrolyzer stack, the circuit loop arranged to pass a discharge current of the respective electrolyzer stack.

7. The electrolysis system of any one of claims 1 to 6, wherein upon detection of a clearance of the adverse operational event, the bypass switch is set to an electrically open position and then the main switch is set to an electrically closed condition, and this is effective to electrically reconnect the respective electrolyzer stack.

8. The electrolysis of any one of claims 1 to 7, wherein the main switch and/or the bypass switch is each respectively selected from the group consisting of a mechanical switch, a semiconductor-based switch, a circuit breaker, a vacuum-based circuit breaker, an Insulated Gate Bipolar Transistor (IGBT) switch, a Gate Turn-Off Thyristor (GTO) switch.

9. The electrolysis system of any one of claims 1 to 8, wherein the first time interval is in a range between 50 milliseconds and 500 milliseconds.

10. The electrolysis system of claim 9, wherein the first time interval is in a range between 200 milliseconds and 400 milliseconds.

11. A method to operate an electrolysis system notwithstanding occurrence of an adverse operational event, the method comprising:
electrically coupling a power bus to a power grid, the power bus configured to transfer electric power from the power grid to the electrolysis system;
connecting in series circuit a plurality of electrolyzer stacks to one another, the plurality of electrolyzer stacks being energized by way of the power bus to perform an electrolysis process;
connecting a respective electrolyzer stack bypass circuitry to an input side of a respective electrolyzer stack of the plurality of electrolyzer stacks;
based on detection of an adverse operational event, electrically disconnecting, within a first time interval, the respective electrolyzer stack from the plurality of electrolyzer stacks;
wherein the bypass circuitry comprises a main circuit branch including a main switch that normally is in an electrically closed position to pass, during normal operation of the electrolysis system, a flow of operating electrical current to the respective electrolyzer stack, the bypass circuit further comprising a bypass circuit branch and a current transition circuit branch,
setting the main switch to an electrically open position upon detection of the adverse operational event,
connecting in parallel circuit the main circuit branch and the current transition circuit branch to transition the flow of the operating electrical current from the main circuit branch to the bypass circuit branch, the transition to occur within a second time interval that is shorter than the first time interval,
connecting in the current transition circuit branch a diode having an anode connected to the input side of the respective electrolyzer stack, the diode having a cathode connected to an input node of the main circuit branch; and
operating remaining electrolyzer stacks from the plurality of electrolyzer to continue the electrolysis process notwithstanding of occurrence of the adverse operational event.

12. The method according to claim 11, wherein the adverse operational event is selected from the group consisting of a fault event of the respective electrolyzer stack, and a voltage ride through event.

13. The method according to claim 11 or 12, wherein the voltage ride through event is a low voltage ride through event.

14. The method according to any one of claims 11 to 13, interconnecting an inductor in the current transition circuit branch, wherein the interconnecting of the inductor is between the input side of the respective electrolyzer stack and the anode of the diode, and choosing an inductance value of the inductor to limit to a desired value a rate of change of the operating current flow being transitioned by way of the current transition circuit branch.

15. The method according to any one of claims 11 to 14, further comprising defining a circuit loop that is between the input side of the respective electrolyzer stack and an output side of the respective electrolyzer stack, wherein the defining of the circuit loop comprises setting the bypass switch to the electrically closed position upon completion of the second time interval, and interconnecting in the circuit loop a resistor element between the input side of the respective electrolyzer stack and the input junction of the respective electrolyzer stack, the circuit loop arranged to pass a discharge current of the respective electrolyzer stack.

16. The method according to any one of claims 11 to 15, wherein upon detection of a clearance of the adverse operational event, setting the bypass switch to an electrically open position and then setting the main switch to an electrically closed condition and this is effective to electrically reconnect the respective electrolyzer stack.

17. The electrolysis system of claim 1, wherein the electrolysis process comprises a water electrolysis process configured to produce hydrogen.

18. The method according to claim 11, wherein the electrolysis process comprises a water electrolysis process configured to produce hydrogen.
